# EUROPEAN PATENT SPECIFICATION

(11) **EP 2 455 839 B1**
(45) Date of publication and mention of the grant of the patent: **06.04.2016**
(21) Application number: 10190447.2
(22) Date of filing: 09.11.2010
(51) Int. Cl.: G06F 3/01

(54) **Method and apparatus for controlling an output device of a portable electronic device**
Verfahren und Vorrichtung zum Steuern einer Ausgabevorrichtung einer tragbaren elektronischen Vorrichtung
Procédé et appareil permettant de contrôler un dispositif de sortie d'un dispositif électronique portable

(43) Date of publication of application: 23.05.2012
(73) Proprietor: BlackBerry Limited, Waterloo, ON N2K 0A7 (CA)
(72) Inventor: Plestid, Thomas Leonard Trevor, Kanata Ontario K2K 3K1 (CA)
(74) Representative: MERH-IP Matias Erny Reichl Hoffmann Patentanwälte PartG mbB

(56) References cited:
- US-A1- 2009 197 615
- US-A1- 2010 064 259

## Description

### FIELD

The specification relates generally to portable electronic devices, and specifically to a method, system and apparatus for controlling an output device of a portable electronic device.

### BACKGROUND

As portable electronic devices and other computing devices become more powerful, the functionality provided by such devices continues to expand and improve. In particular, continued increases in computational power allow such devices to carry out a wider range of interactions with their users and environments. In particular, motion capture and motion tracking technologies have previously been used, for example, in cinematography, but can require significant computing resources. The increasing capabilities of portable electronic devices allow such devices to carry out interactions based on similar technologies.

US 2010/064259 A1 shows a method of controlling a three-dimensional user interface, which controls a three-dimensional user interface to follow a user's motion, and a mobile terminal using the same. The method comprises displaying a plurality of three-dimensional menu icons, sensing movement of a user, and rotating at least one of the plurality of three-dimensional menu icons according to the sensed movement such that at least one reference face of the at least one of the plurality of three-dimensional menu icons follows the user's movement.

US 2009/197615 A1 shows a device and a method for controlling the user interface of a mobile device. The method includes determining a distance relationship between a user's body and the mobile device, and changing a configuration of at least one of at least one input unit and at least one output unit depending on the determined distance relationship.

### GENERAL

A One aspect of the present invention is a method as defined in independent claim 1. Another aspect of the invention is an apparatus as defined in independent claim 7. Further embodiments of the invention are specified in the respective appended dependent claims.

### BRIEF DESCRIPTIONS OF THE DRAWINGS

Embodiments are described with reference to the following figures, in which:
Figure 1 depicts a schematic diagram of a portable electronic device and an external object, according to a non-limiting embodiment;
Figure 2 depicts a schematic block diagram of various components of the portable electronic device of Figure 1, according to a non-limiting embodiment;
Figure 3 depicts a method of controlling an output device of the portable electronic device of Figure 1, according to a non-limiting embodiment;
Figure 4 depicts a schematic diagram showing movement of the portable electronic device and external object of Figure 1, according to a non-limiting embodiment;
Figure 5a depicts a representation displayed by a display device of the portable electronic device of Figure 1, according to a non-limiting embodiment;
Figure 5b depicts a further representation displayed by a display device of the portable electronic device of Figure 1, according to a non-limiting embodiment;
Figure 6a depicts another representation displayed by a display device of the portable electronic device of Figure 1, according to another non-limiting embodiment;
Figure 6b depicts yet another representation displayed by a display device of the portable electronic device of Figure 1, according to another non-limiting embodiment; and,
Figure 7 depicts a method of controlling an output device of the portable electronic device of Figure 1, according to a further non-limiting embodiment.

### DETAILED DESCRIPTION OF THE EMBODIMENTS

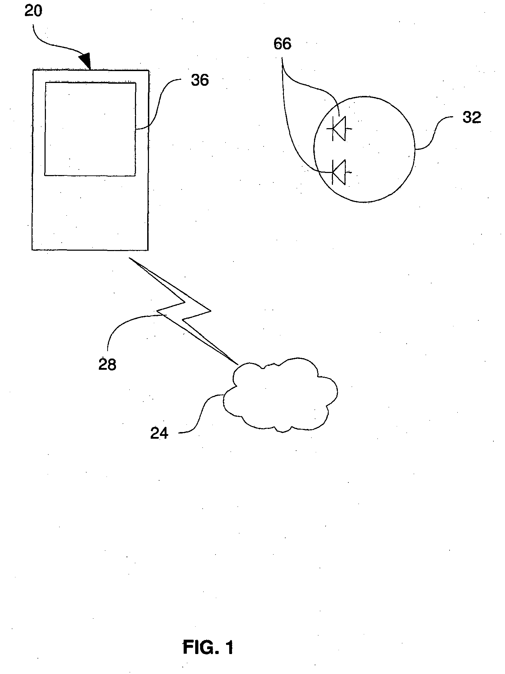

Referring now to Figure 1, a portable electronic device 20 is depicted. In the present embodiment, portable electronic device 20 is based on the computing environment and functionality of a hand-held wireless communication device. It will be understood, however, that portable electronic device 20 is not limited to a hand-held wireless communication device. Other portable electronic devices are possible, such as a personal digital assistants ("PDA"), a cellular telephone, a smart telephone, a laptop computer, a multimedia player and the like. In general, portable electronic device 20 can be configured to communicate with a network 24 via a link 28. Link 28 between portable electronic device 20 and network 24 can, in a present embodiment, be based on core mobile network infrastructure (e.g. Global System for Mobile communications ("GSM"); Code Division Multiple Access ("CDMA"); CDMA 2000; 3G; 4G). Link 28 can also be based on wireless local area network ("WLAN") infrastructures such as the Institute for Electrical and Electronic Engineers ("IEEE") 802.11 Standard (and its variants), Bluetooth and the like, or hybrids thereof. Note that in an exemplary variation of portable electronic device 20, link 28 can also be a wired connection to network 24. In further exemplary variations, link 28 can be a composite link comprising both wireless and wired links as described above.

Also depicted in Figure 1 is an external object 32. It will now be apparent that external object 32 is "external" to portable electronic device 20 in that it is moveable in three-dimensional space independently from portable electronic device 20. External object 32 can be, in a present embodiment, the head of a user of portable electronic device 20, although it will be appreciated that a wide variety of other external objects will also occur to those skilled in the art.

Portable electronic device 20 includes, among other components, output devices such as a display device 36. In general, portable electronic device 20 is configured to control at least one output device (such as display device 36) according to the movement of external object 32, as will be described in greater detail below.

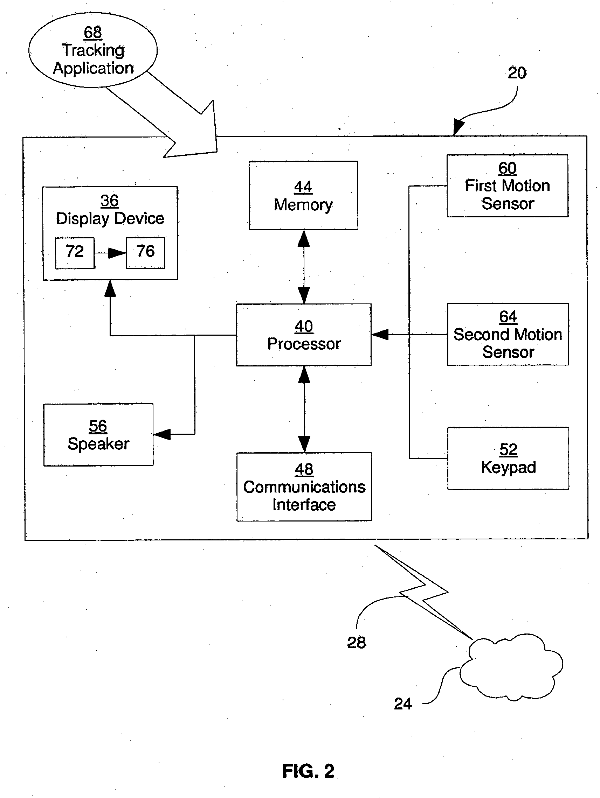

Referring now to Figure 2, a schematic block diagram shows portable electronic device 20 in greater detail. It will be understood that the structure in Figure 2 is purely exemplary, and contemplates a device that may be used for both wireless voice (e.g. telephony) and wireless data (e.g. email, web browsing, text) communications. Portable electronic device 20 is based on a microcomputer that includes a processor 40. Portable electronic device 20 also includes a memory 44, which can comprise volatile memory such as Random Access Memory ('RAM'). Memory 44 can also comprise non-volatile memory such as Read Only Memory ('ROM'), Electrically Erasable Programmable Read Only Memory ('EEPROM'), flash memory and the like. It will be appreciated that memory 44 can also comprise a suitable combination of volatile and non-volatile memory.

Portable electronic device 20 also includes a communications interface 48 for communicating with network 24 via link 28, as described earlier. Portable electronic device 20 also includes, for example, a keypad 52 for receiving input data (in the form of key selections, for example). It will now be apparent that portable electronic device 20 can further include additional input devices (not shown), such as one or more microphones, a touch screen integrated with at least a portion of display device 36, a trackball and the like. Portable electronic device 20 also includes a variety of output devices. Among the output devices of portable electronic device 20 are display device 36 and a speaker 56. It will now be apparent that speaker 56 can also be an array of two or more speakers. Other output devices are also contemplated, such as a motor (not shown) for vibrational output. The various components of portable electronic device 20 are interconnected with processor 40 via a communications bus (not shown).

As seen in Figure 2, among the input devices of portable electronic device 20 are a first motion sensor 60 and a second motion sensor 64. First motion sensor 60 generates first motion data representing movement of external object 32 relative to portable electronic device 20. It will now be apparent that the first motion data can be generated in a variety of ways. Referring briefly to Figure 1, in the present non-limiting embodiment, external object 32 is equipped with at least two light sources such as light-emitting diodes ("LEDs") 66. Other light sources are also contemplated, such as incandescent light sources or organic light-emitting diodes ("OLEDs"). In some embodiments, at least one of the LEDs 66 can be coupled to an earpiece (not shown) associated with portable electronic device 20. In the present embodiment, LEDs 66 can be infrared LEDs, though various alternatives - including visible light as well as other regions of the electromagnetic spectrum - will occur to those skilled in the art.

Returning to Figure 2, first motion sensor 60 can generate first motion data by receiving light from LEDs 66. It will now be apparent that first motion sensor 60 can be, for example, a digital camera. It is noted that the term "generation" as used herein is also intended to describe embodiments in which first motion sensor 60 assists in the generation of motion data but is not solely responsible for such generation. For example, first motion sensor 60 can capture one or more images for processing by processor 40. Processor 40 can then determine, based on representations of LEDs 66 within the captured images, the changes in position (i.e. movement) of external object 32 relative to portable electronic device 20.

Second motion sensor 64 generates second motion data representing movement of portable electronic device 20 in three-dimensional space. In the present non-limiting embodiment, second motion sensor 64 can be a 3-axis accelerometer in portable electronic device 20. As discussed above with respect to first motion sensor 60, it will be appreciated that "generation" of second motion data by second motion sensor 64 can also involve processor 40, in conjunction with other components of portable electronic device 20.

It will be appreciated that first and second motion sensors 60 and 64 are not limited to the types of motion sensors described above. In other embodiments, first motion sensor 60 can be any suitable motion sensor capable of generating motion data representing the movement of external object 32 relative to portable electronic device 20. Second motion sensor 64 can be any suitable motion sensor capable of generating motion data representing the movement of portable electronic device 20. For example, first and second motion sensors 60 and 64 can include any suitable combination of accelerometers, GPS, light-sensitive components and the like. It will be appreciated that in embodiments (not shown) where first motion sensor 60 includes one or more accelerometers, the one or more accelerometers can be affixed to external object 32, and can transmit acceleration data to first motion sensor 60. For instance, first motion sensor 60 can be integrated with communications interface 48, or can be a separate communications interface configured for receiving acceleration data from the one or more accelerometers.

Portable electronic device 20 also includes a tracking application 68. Tracking application 68 comprises programming instructions for execution by processor 40. In a present embodiment, tracking application 68 can be maintained in memory 44 of portable electronic device. However, it will be understood that in other embodiments, tracking application 68 can be maintained in any of a variety of computer readable storage media, including but not limited to removable diskettes, optical media such as compact discs ("CDs") and digital video discs ("DVDs"), hard drive disks, USB drives and the like.

Processor 40 can execute the programming instructions of tracking application 68, making appropriate use of memory 44 as necessary. Tracking application 68, when executed by processor 40, configures processor 40 to control at least one output device of portable electronic device 20 based on the movement of external object 32. More particularly, tracking application 68 configures processor 40 to generate third motion data based on the first and second motion data described above. The third motion data represents the movement of external object 32. Processor 40 is then configured, via execution of tracking application 68, to control at least one output device based on the third motion data.

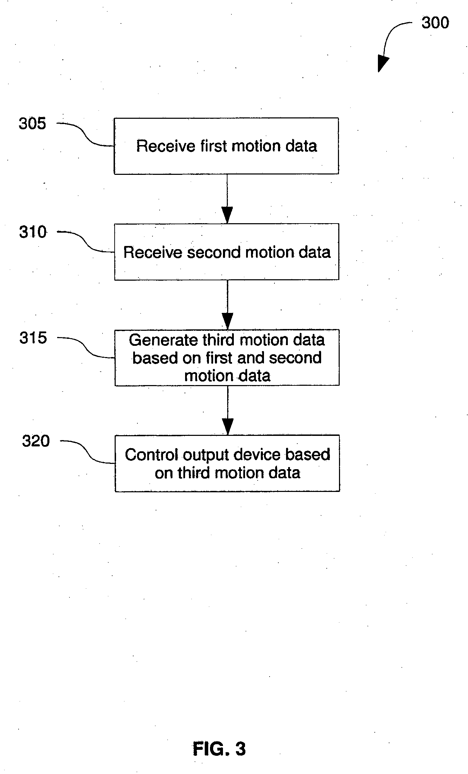

Referring now to Figure 3, a flowchart is shown depicting a method, indicated generally at 300, of controlling an output device of portable electronic device 20. It will be understood that method 300 can be carried out by processor 40 while executing tracking application 68.

Method 300 begins at block 305 with the receipt of first motion data at processor 40. First motion data, as described above, represents the movement of external object 32 relative to portable electronic device 20. As will be appreciated by those skilled in the art, the first motion data can include an indication of the current position of external object 32, and/or can include indications of changes in the position of external object 32 over a predetermined period of time. In other embodiments, other types of motion data will occur to those skilled in the art (e.g. velocity, acceleration data and so on). It will be appreciated that as processor 40 can be involved in the generation of first motion data, the first motion data is "received" by processor 40 at block 305 in that sufficient information is received from first motion sensor 60 for processor 40 to complete the generation of first motion data. Received first motion data can be stored in memory 44.

Next, at block 310, second motion data is received at processor 40. Second motion data represents the movement of portable electronic device 20 (typically with respect to the Earth), and can therefore include any of velocity, acceleration and direction information (or a combination thereof) for portable electronic device 20 over a predetermined period of time. As above, it will be appreciated that block 310 can involve the receipt of sufficient information from second motion sensor 64 to complete the generation of second motion data. Received second motion data can be stored in memory 44. It will now be apparent that blocks 305 and 310 of method 300 can be carried out substantially simultaneously, thus allowing first and second motion data received at processor 40 to relate to substantially the same period of time.

Following the receipt of first and second motion data at blocks 305 and 310, method 300 proceeds to block 315. At block 315, processor 40 is configured by tracking application 68 to generate third motion data based on the received first and second motion data. Third motion data generated at processor 40 represents the movement of external object 32, substantially independent of the movement of portable electronic device 20. Third motion data may be thought of conventionally as movement of external object 32 with respect to the portable electronic device 20, as though the portable electronic device 20 were stationary.

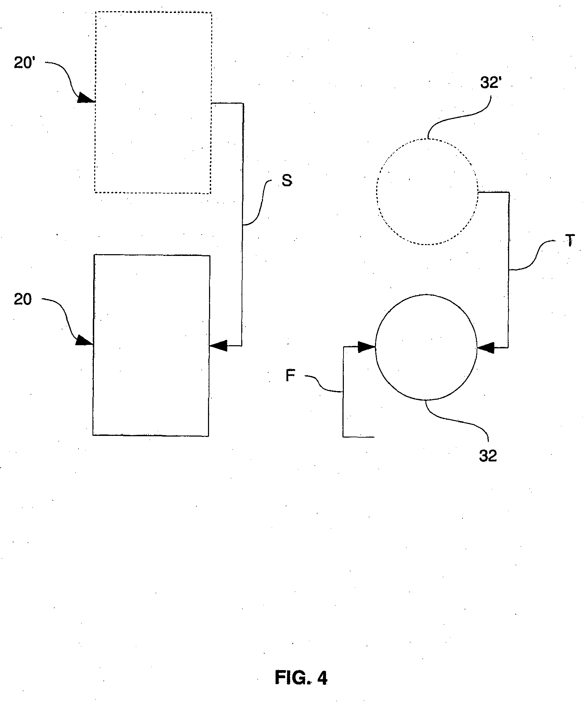

Referring briefly to Figure 4, portable electronic device 20 and external object 32 are shown. In particular, the movement of portable electronic device 20 arid external object 32 over substantially the same period of time is shown. Reference characters 20' and 32' indicate the previous positions (shown in dashed lines) of portable electronic device 20 and external object 32, respectively. The present positions of portable electronic device 20 and external object 32 are shown in solid lines. As can be seen from the Figure, both portable electronic device 20 and external object 32 have moved in the same direction (i.e. "downwards" on the page). However, portable electronic device 20 has traversed a greater distance than external object 32. Thus, first motion data, indicated at "F," shows that the movement of external object 32 relative to portable electronic device 20 was "upwards" on the page. Second motion data "S" shows the movement of portable electronic device 20. Third motion data "T" shows the "actual" movement of external object 32, independent of the movement of portable electronic device 20.

Returning to Figure 3, therefore, at block 315 processor 40 can generate third motion data, for example, by subtracting one of first and second motion data from the other of first and second motion data. Subtracting may include not only finding the difference of scalar quantities but also subtraction of vector quantities, such as if the first and second motion data comprise magnitude and directional information. The performance of block 315 can also include the performance of various types of filtering, noise and/or jitter removal, and the like, as will occur to those skilled in the art. For example, data indicating movement in certain directions or at certain frequencies can be removed, attenuated or emphasized by processor 40 during generation of third motion data.

Proceeding to block 320 following completion of block 315, processor 40 can then control at least one output device of portable electronic device 20 based on the third motion data generated at block 315.

In a present exemplary embodiment, at block 320 processor 40 can be configured by tracking application 68 to control display device 76 based on third motion data. Returning to Figure 2, display device 36 can include circuitry 72 for producing representations (generally indicated at 76) for display by display device 36. Representations 76 can be based on representation data generated by processor 40 and stored in memory 44. It will be understood that display device 36 can comprise any suitable combination of flat panel (for example, LCD, plasma and the like) and/or CRT displays. Circuitry 72 can include any suitable combination of circuitry for controlling the flat panel and/or CRT displays. For example, circuitry 72 can include display buffers, transistors, electron beam controllers, LCD cells, plasma cells, phosphors and the like. In general, display device 36 can be controlled by processor 40 to display representations 76.

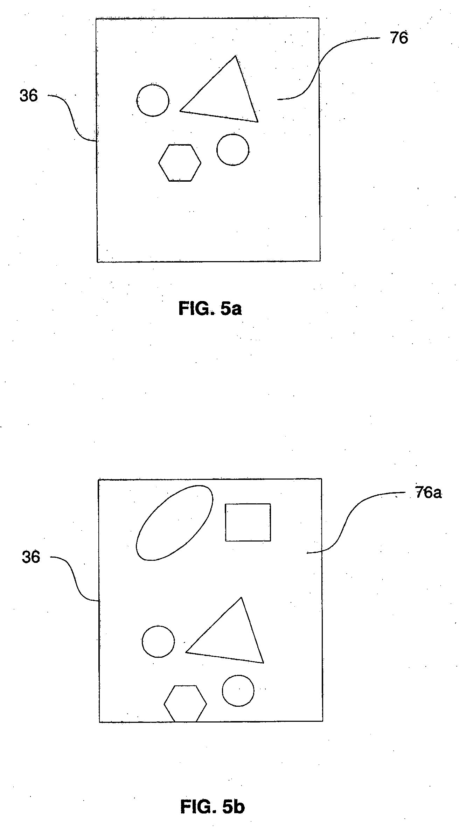

An exemplary representation 76 is shown in Figure 5a. Representation 76 is representative of a portion of an image maintained, for example, in memory 44 of portable electronic device 20.

At block 320, processor 40 can control display device 36 in a wide variety of ways based on third motion data. For example, tracking application 68 can configure processor 40 to control display device 36 to behave as a window or picture frame. Referring now to Figure 5b, an updated representation 76a is displayed by display device 36. In representation 76a, the portion of the image shown in Figure 5a is located closer to the bottom of display device 36, while a previously-unseen portion of the image has become visible towards the top of display device 36. In a present exemplary embodiment, processor 40 can cause display device 36 to display such an updated representation in response to movement of external object 32 as shown in Figure 4. In Figure 4, external object 32 was shown moving downwards on the page. Thus, the representation 76a of Figure 5b represents the image having also moved downwards, as if viewed from the location of external object 32 through a window frame.

It will be appreciated that the above-described control of display device 36 based on third motion data can be implemented, for example, to compensate for rapid, jerky movements of external object 32. Such movements can, in some embodiments, be substantially mirrored by successively updated representations 76 such that representations 76 appear to be substantially stationary from the point of view of external object 32.

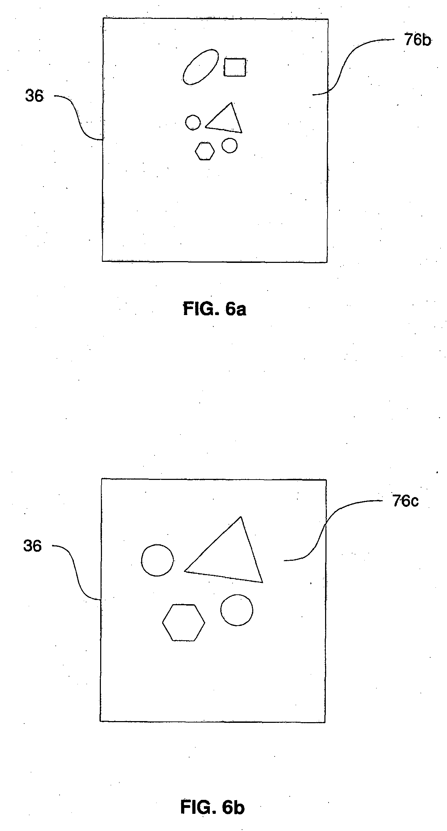

It will now be apparent that display device 36 can be controlled in a variety of ways by processor 40 while executing tracking application 68. For example, in some embodiments processor 40 can cause display device 36 to display zoom in or out. In such embodiments, third motion data indicating movement of external object 32 in a certain direction can cause display 36 to display an updated representation showing only a portion of a previous representation, but at greater magnification, as discussed below with reference to Figures 6a and 6b.

Figure 6a shows a further representation 76b generated by display device 36, while Figure 6b shows yet another representation, 76c. It will now be apparent that in representation 76b, the image from Figures 5a and 5b is displayed at a reduced zoom level (that is, the image is smaller and thus a greater portion of the image is visible) while in representation 76c the image is displayed at an increased zoom level. Such control over display device 36 can be exerted by processor 40 in response to third motion data indicating that external object 32, as shown in Figure 4, has moved rightwards on the page, taking it further from portable electronic device 20. Display device 36 is thus controlled to behave as a window or picture frame, through which a lesser portion of a scene would be visible as the viewer moved away from the window or picture frame.

It will also now be apparent that other output devices, or any combination of output devices, can be controlled by processor 40 executing tracking application 68. In some embodiments, speaker 56 can be controlled by processor 40 based on third motion data. For example, similarly to the zoom feature described above, the volume of speaker 56 can be adjusted upwards or downwards if third motion data indicates movement of external object 32 in a certain direction. As a further example, speaker 56, in some embodiments (not shown) can have directional capabilities. For instance, speaker 56 can be an array of speakers or a movable speaker. The output of such directional output devices can be controlled based on third motion data, for example to project audio output towards external object 32.

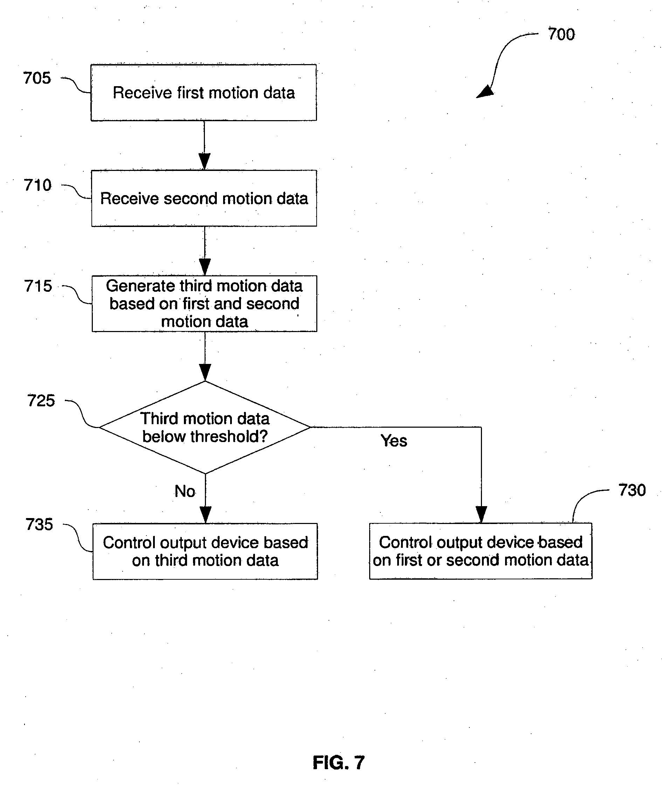

Referring now to Figure 7, a flowchart is shown depicting a method, indicated generally at 700, of controlling an output device of portable electronic device 20 according to another non-limiting embodiment.

Blocks 705 to 715 of method 700 are similar to blocks 305 to 315, respectively, of method 300 as discussed above. At block 725, however, performance of method 700 differs from performance of method 300 in that a determination is made as to whether third motion data is below a predetermined threshold. It will be understood that such a threshold can be based on a certain velocity, acceleration, distance traveled in a given time period, or a combination thereof. Various thresholds will occur to those skilled in the art. If at block 725 processor 40 determines that third motion data does fall below the threshold (i.e. that external object 32 is moving "too little"), method 700 proceeds to block 730, at which processor 40 controls an output device based on at least one of the first and second motion data. In other words, if little or no movement of external object 32 is detected, the output devices of portable electronic device 20 can be controlled by processor 40 executing tracking application 68 based on the movement of portable electronic device 20 itself.

The output devices of portable electronic device 20 can be controlled at step 730 in manners similar to those described above (e.g. "window" functionality, zooming, volume adjustment). Controlling an output device may also include controlling an output device other than a display. For example, controlling an output device may comprise adjusting an image to reduce blur when the image is sent to a printer for printing. Additional examples of output device control will occur to those skilled in the art.

If, on the other hand, it is determined that third motion data does not fall below the predetermined threshold at block 725, method 700 proceeds to block 735, at which processor 40 can be configured to control the output devices of portable electronic device 20 as described above in relation to block 320 of method 300.

From the above description of the present embodiment, certain advantages will now be apparent. In particular, processor 40 of portable electronic device 20 as described above can be configured to distinguish between the movement of portable electronic device 20 and external object 32, thus allowing for a broader range of control options for the output devices of portable electronic device 20. Other advantages will also occur to those skilled in the art.

Those skilled in the art will appreciate that in some embodiments, the functionality of tracking application 68 can be implemented using preprogrammed hardware or firmware elements (e.g., application specific integrated circuits (ASICs), electrically erasable programmable read-only memories (EEPROMs), etc.), or other related components. In other embodiments, the functionality of portable electronic device 20 can be achieved using a computing apparatus (not shown) that has access to a code memory (not shown) which stores computer-readable programming instructions for operation of the computing apparatus. The computer-readable programming instructions can be stored on a medium which is fixed, tangible and readable directly by the components of the computing apparatus, (e.g., removable diskette, CD-ROM, ROM, fixed disk, USB drive). Alternatively, the computer-readable programming instructions can be stored remotely but transmittable to these components via a modem or other communications interface connected to a network (including, without limitation, the Internet) over a transmission medium. The transmission medium can be either a non-wireless medium (e.g., optical or analog communications lines) or a wireless medium (e.g., microwave, infrared, free-space optical or other transmission schemes) or a combination thereof.

## Claims

1. A method of controlling an output device of a portable electronic device (20) comprising a processor (40), a first motion sensor (60), a second motion sensor (64) that comprises an accelerometer, and an output device (36, 56), the method comprising:
receiving (305, 705) at the processor (40), from the first motion sensor (60), first motion data representing movement of an external object (32) relative to the portable electronic device (20);
receiving (310, 710) at the processor, from the second motion sensor (64), second motion data representing movement of the portable electronic device (20);
generating (315, 715), at the processor (40), third motion data based on the first and second motion data, the third motion data representing movement of the external object (32) independent of the movement of the portable electronic device (20); and
controlling (320, 735) the output device (36, 56) based on the third motion data.

2. The method of claim 1, wherein generating (315, 715) the third motion data comprises subtracting one of the first and second motion data from the other of the first and second motion data.

3. The method of claim 1 or claim 2, wherein the output device comprises a display device (36), and wherein controlling (320, 735) the display device (36) comprises updating a representation (76, 76a, 76b, 76c) produced by the display device (36) based on the third motion data.

4. The method of any one of claims 1 to 3, wherein the output device comprises a speaker (56), and wherein controlling (320, 735) the speaker comprises varying a volume of the speaker based on the third motion data.

5. The method of any one of claims 1 to 4, wherein controlling (320) comprises:
determining (725) if the third motion data is representative of movement below a predetermined threshold; and
when the determination is affirmative, controlling (730) the output device based on one of the first and second motion data, and when the determination is negative, controlling (735) the output device based on the third motion data.

6. The method of any one of claims 1 to 5, wherein generating (315, 715) third motion data comprises performing at least one of filtering and noise removal.

7. A portable electronic device (20) comprising:
an output device (36, 56);
a first motion sensor (60) for generating first motion data representing movement of an external object (32) relative to the portable electronic device (20);
a second motion sensor (64) for generating second motion data representing movement of the portable electronic device (20), wherein the second motion sensor (64) comprises an accelerometer;
a memory (44) for maintaining first and second motion data; and
a processor (40) interconnected with the first motion sensor (60), the second motion sensor (64) and the memory (44), the processor (40) configured to receive the first motion data (305, 705) and the second motion data (310, 710); the processor (40) further configured to generate (315, 715) third motion data based on the first and second motion data, the third motion data representing movement of the external object (32) independent of the movement of the portable electronic device (20); the processor (40) further configured to control (320, 735) the output device (36, 56) based on the third motion data.

8. The portable electronic (20) device of claim 7, the processor (40) further configured to generate (315, 715) the third motion data by subtracting one of the first and second motion data from the other of the first and second motion data.

9. The portable electronic device (20) of claim 7 or claim 8, wherein the output device comprises a display device (36); the processor (40) further configured control (320, 735) the display device (36) to update a representation (76, 76a, 76b, 76c) produced by the display device (36) based on the third motion data.

10. The portable electronic device (20) of any one of claims 7 to 9, wherein the output device comprises a speaker (56); the processor (40) further configured to control (320, 735) the speaker (56) to vary a volume of the speaker based on the third motion data.

11. The portable electronic device (20) of any one of claims 7 to 10, the processor (40) further being configured to determine (725) if the third motion data is representative of movement below a predetermined threshold; and when the determination is affirmative, to control (730) the output device (36, 56) based on one of the first and second motion data; and when the determination is negative, to control (735) the output device (36, 56) based on the third motion data.

12. The portable electronic device (20) of any one of claims 7 to 11, the processor (40) further configured to perform at least one of filtering and noise removal during generation (315, 715) of the third motion data.

13. The portable electronic device (20) of any one of claims 7 to 12, wherein the first motion sensor (60) comprises a digital camera for receiving light from at least one light emitting diode (66) affixed to the external object (32).

14. A computer readable storage medium for storing computer readable instructions for execution by a processor, the computer readable instructions implementing the steps of any one of claims 1 to 6.

## Patentansprüche

1. Verfahren zum Steuern einer Ausgabevorrichtung einer tragbaren elektronischen Vorrichtung (20) aufweisend einen Prozessor (40), einen ersten Bewegungssensor (60), einen zweiten Bewegungssensor (64), der einen Beschleunigungsmesser aufweist, und eine Ausgabevorrichtung (36, 56), das Verfahren umfassend:
• Empfangen (305, 705) am Prozessor (40), von dem ersten Bewegungssensor (60), von ersten Bewegungsdaten, welche Bewegung eines externes Objekts (32) relativ zu der tragbaren elektronischen Vorrichtung (20) darstellen;
• Empfangen (305, 705) am Prozessor (40), von dem zweiten Bewegungssensor (60), von zweiten Bewegungsdaten, welche Bewegung der tragbaren elektronischen Vorrichtung (20) darstellen;
• Erzeugen (315, 715) am Prozessor (40) von dritten Bewegungsdaten auf Grundlage der ersten und zweiten Bewegungsdaten, wobei die dritten Bewegungsdaten Bewegung des externen Objekts (32) unabhängig von der Bewegung der tragbaren elektronischen Vorrichtung (20) darstellen; und
• Steuern (320, 735) der Ausgabevorrichtung (36, 56) auf Grundlage der dritten Bewegungsdaten.

2. Verfahren nach Anspruch 1, wobei das Erzeugen (315, 715) der dritten Bewegungsdaten das Subtrahieren der ersten oder zweiten Bewegungsdaten von den jeweils anderen der ersten und zweiten Bewegungsdaten umfasst.

3. Verfahren nach Anspruch 1 oder Anspruch 2, wobei die Ausgabevorrichtung eine Anzeigevorrichtung (36) aufweist, und wobei das Steuern (320, 735) der Anzeigevorrichtung (36) das Aktualisieren einer Darstellung (76, 76a, 76b, 76c), die von der Anzeigevorrichtung (36) auf Grundlage der dritten Bewegungsdaten erzeugt wurde, umfasst.

4. Verfahren nach einem der Ansprüche 1 bis 3, wobei die Aüsgabevorrichtung einen Lautsprecher (56) aufweist, und wobei das Steuern (320, 735) des Lautsprechers das Verändern einer Lautstärke des Lautsprechers auf Grundlage der dritten Bewegungsdaten umfasst.

5. Verfahren nach einem der Ansprüche 1 bis 4, wobei das Steuern (320) umfasst:
• Bestimmen (725), ob die dritten Bewegungsdaten eine Bewegung unterhalb eines vorgegebenen Grenzwerts wiedergeben; und
• wenn diese Bestimmung bejahrt wurde, Steuern (730) der Ausgabevorrichtung auf Grundlage der ersten und zweiten Bewegungsdaten, und wenn die Bestimmung negativ ist, Steuern (735) der Ausgabevorrichtung auf Grundlage der dritten Bewegungsdaten.

6. Verfahren nach einem der Ansprüche 1 bis 5, wobei das Erzeugen (315, 715) der dritten Bewegungsdaten das Durchführen einer Filterung und/oder Rauschentfernung umfasst.

7. Tragbare elektronische Vorrichtung (20), aufweisend:
• eine Ausgabevorrichtung (36; 56);
• einen ersten Bewegungssensor (60) zum Erzeugen erster Bewegungsdaten, die Bewegung eines externen Objekts (32) gegenüber der tragbaren elektronischen Vorrichtung (20) darstellen;
• einen zweiten Bewegungssensor (64) zum Erzeugen zweiter Bewegungsdaten, die Bewegung der tragbaren elektronischen Vorrichtung (20) darstellen, wobei der zweite Bewegungssensor (64) einen Beschleunigungsmesser aufweist;
• einen Speicher (44) zum Erhalten ersten und zweiter Bewegungsdaten; und
• einen mit dem ersten Bewegungssensor (60), dem zweiten Bewegungssensor (64) und dem Speicher (44) verbundenen Prozessor (40), wobei der Prozessor dazu konfiguriert ist, die ersten Bewegungsdaten (305, 705) und die zweiten Bewegungsdaten (310, 710) zu empfangen; und wobei der Prozessor (40) ferner dazu konfiguriert ist, dritte Bewegungsdaten auf Grundlage der ersten und zweiten Bewegungsdaten zu erzeugen (315, 715) und die dritten Bewegungsdaten des externen Objekts (32) unabhängig von der Bewegung der tragbaren elektronischen Vorrichtung (20) darstellen; wobei der Prozessor (40) ferner dazu konfiguriert ist, die Ausgabevorrichtung (36, 56) auf Grundlage der dritten Bewegungsdaten zu steuern.

8. Tragbare elektronische Vorrichtung (20) nach Anspruch 7, wobei der Prozessor (40) ferner dazu konfiguriert ist; die dritten Bewegungsdaten durch Subtrahieren der ersten oder zweiten Bewegungsdaten von den jeweils anderen der ersten und zweiten Bewegungsdaten zu erzeugen (315,715).

9. Tragbare elektronische Vorrichtung (20) nach Anspruch 7 oder Anspruch 8, wobei die Ausgabevorrichtung eine Anzeigevorrichtung (36) aufweist; wobei der Prozessor (40) ferner dazu konfiguriert ist, die Anzeigevorrichtung (36) dahingehend zu steuern (320, 735), eine von der Anzeigevorrichtung (36) auf Grundlage der dritten Bewegungsdaten erzeugte Darstellung (76, 76a, 76b, 76c) zu aktualisieren.

10. Tragbare elektronische Vorrichtung (20) nach einem der Ansprüche 7 bis 9, wobei die Ausgabevorrichtung einen Lautsprecher (56) aufweist; und wobei der Prozessor (40) ferner dazu konfiguriert ist, den Lautsprecher (56) dahingehend zu steuern (320, 735), eine Laustärke des Lautsprechers auf Grundlage der dritten Bewegungsdaten zu verändern.

11. Tragbare elektronische Vorrichtung (20) nach einem der Ansprüche 7 bis 10, wobei der Prozessor (40) ferner dazu konfiguriert ist zu bestimmen (725), ob die dritten Bewegungsdaten Bewegung unterhalb eines vorgegebenen Grenzwerts wiedergeben; und wenn diese Bestimmung bejaht wurde, Steuern (730) der Ausgabevorrichtung (36,56) auf Grundlage der ersten und zweiten Bewegungsdaten; und wenn die Bestimmung negativ ist, Steuern (735) der Ausgabevorrichtung (36, 56) auf Grundlage der dritten Bewegungsdaten.

12. Tragbare elektronische Vorrichtung (20) nach einem der Ansprüche 7 bis 11, wobei der Prozessor (40) ferner dazu konfiguriert ist, ein Filtern und/oder eine Rauschentfernung während der Erzeugung (315, 715) der dritten Bewegungsdaten durchzuführen.

13. Tragbare elektronische Vorrichtung (20) nach einem der Ansprüche 7 bis 12, wobei der erste Bewegungssensor (60) eine Digitalkamera zum Aufnehmen von Licht von zumindest einer Lichtemittierenden Diode (66) aufweist, die an dem externen Objekt (32) befestigt ist.

14. Computer-lesbares Speichermedium zum Speichern von Computer-lesbaren Anweisungen zur Ausführung durch den Prozessor, wobei die Computer-lesbaren Anweisungen die Schritte nach einem der Ansprüche 1 bis 6 implementieren.

## Revendications

1. Procédé de commande d'un dispositif de sortie d'un dispositif électronique portatif (20) comprenant un processeur (40), un premier capteur de mouvement (60), un second capteur de mouvement (64) qui comprend un accéléromètre, et un dispositif de sortie (36, 56), le procédé comprenant :
la réception (305, 705) au niveau du processeur (40), en provenance du premier capteur de mouvement (60), de premières données de mouvement représentant un déplacement d'un objet externe (32) par rapport au dispositif électronique portatif (20) ;
la réception (310, 710) au niveau du processeur, en provenance du second capteur de mouvement (64), de deuxièmes données de mouvement représentant un déplacement du dispositif électronique portatif (20) ;
la génération (315, 715), au niveau du processeur (40), de troisièmes données de mouvement sur la base des premières et deuxièmes données de mouvement, les troisièmes données de mouvement représentant un déplacement de l'objet externe (32) indépendant du déplacement du dispositif électronique portatif (20) ; et
la commande (320, 735) du dispositif de sortie (36, 56) sur la base des troisièmes données de mouvement.

2. Procédé selon la revendication 1, dans lequel la génération (315, 715) des troisièmes données de mouvement comprend la soustraction d'une des premières et deuxièmes données de mouvement de l'autre des premières et deuxièmes données de mouvement.

3. Procédé selon la revendication 1 ou la revendication 2, dans lequel le dispositif de sortie comprend un dispositif d'affichage (36), et dans lequel la commande (320, 735) du dispositif d'affichage (36) comprend la mise à jour d'une représentation (76, 76a, 76b, 76c) produite par le dispositif d'affichage (36) sur la base des troisièmes données de mouvement.

4. Procédé selon l'une quelconque des revendications 1 à 3, dans lequel le dispositif de sortie comprend un haut-parleur (56), et dans lequel la commande (320, 735) du haut-parleur comprend la variation d'un volume du haut-parleur sur la base des troisièmes données de mouvement.

5. Procédé selon l'une quelconque des revendications 1 à 4, dans lequel la commande (320) comprend :
la détermination (725) de si les troisièmes données de mouvement sont représentatives d'un déplacement au-dessous d'un seuil prédéterminé ; et
lorsque la détermination est affirmative, la commande (730) du dispositif de sortie sur la base d'une des premières et deuxièmes données de mouvement, et lorsque la détermination est négative, la commande (735) du dispositif de sortie sur la base des troisièmes données de mouvement.

6. Procédé selon l'une quelconque des revendications 1 à 5, dans lequel la génération (315, 715) de troisièmes données de mouvement comprend l'exécution d'au moins un d'un filtrage et d'une suppression de bruit.

7. Dispositif électronique portatif (20) comprenant :
un dispositif de sortie (36, 56) ;
un premier capteur de mouvement (60) pour générer des premières données de mouvement représentant un déplacement d'un objet externe (32) par rapport au dispositif électronique portatif (20) ;
un second capteur de mouvement (64) pour générer des deuxièmes données de mouvement représentant un déplacement du dispositif électronique portatif (20), où le second capteur de mouvement (64) comprend un accéléromètre ;
une mémoire (44) pour maintenir des premières et deuxièmes données de mouvement ; et
un processeur (40) interconnecté avec le premier capteur de mouvement (60), le second capteur de mouvement (64) et la mémoire (44), le processeur (40) configuré pour recevoir les premières données de mouvement (305, 705) et les deuxièmes données de mouvement (310, 710) ; le processeur (40) en outre configuré pour générer (315, 715) des troisièmes données de mouvement sur la base des premières et deuxièmes données de mouvement, les troisièmes données de mouvement représentant un déplacement de l'objet externe (32) indépendant du déplacement du dispositif électronique portatif (20) ; le processeur (40) en outre configuré pour commander (320, 735) le dispositif de sortie (36, 56) sur la base des troisièmes données de mouvement.

8. Dispositif électronique portatif (20) selon la revendication 7, le processeur (40) en outre configuré pour générer (315, 715) des troisièmes données de mouvement en soustrayant une des premières et deuxièmes données de mouvement de l'autre des premières et deuxièmes données de mouvement.

9. Dispositif électronique portatif (20) selon la revendication 7 ou la revendication 8, dans lequel le dispositif de sortie comprend un dispositif d'affichage (36) ; le processeur (40) en outre configuré pour commander (320, 735) le dispositif d'affichage (36) pour mettre à jour une représentation (76, 76a, 76b, 76c) produite par le dispositif d'affichage (36) sur la base des troisièmes données de mouvement.

10. Dispositif électronique portatif (20) selon l'une quelconque des revendications 7 à 9, dans lequel le dispositif de sortie comprend un haut-parleur (56) ; le processeur (40) en outre configuré pour commander (320, 735) le haut-parleur (56) pour faire varier un volume du haut-parleur sur la base des troisièmes données de mouvement.

11. Dispositif électronique portatif (20) selon l'une quelconque des revendications 7 à 10, le processeur (40) étant en outre configuré pour déterminer (725) si les troisièmes données de mouvement sont représentatives d'un déplacement au-dessous d'un seuil prédéterminé ; et lorsque la détermination est affirmative, pour commander (730) le dispositif de sortie (36, 56) sur la base d'une des premières et deuxièmes données de mouvement ; et lorsque la détermination est négative, pour commander (735) le dispositif de sortie (36, 56) sur la base des troisièmes données de mouvement.

12. Dispositif électronique portatif (20) selon l'une quelconque des revendications 7 à 11, le processeur (40) en outre configuré pour effectuer au moins un d'un filtrage et d'une suppression de bruit au cours de la génération (315, 715) des troisièmes données de mouvement.

13. Dispositif électronique portatif (20) selon l'une quelconque des revendications 7 à 12, dans lequel le premier capteur de mouvement (60) comprend un appareil photo numérique pour recevoir de la lumière en provenance d'au moins une diode électroluminescente (66) fixée à l'objet externe (32).

14. Support de stockage lisible par ordinateur pour stocker des instructions lisibles par ordinateur pour l'exécution par un processeur, les instructions lisibles par ordinateur mettant en oeuvre les étapes selon l'une quelconque des revendications 1 à 6.
